Europäisches Patentamt

European Patent Office

Office européen des brevets

(19)

(11) **EP 0 947 982 A2**

(12) **EUROPÄISCHE PATENTANMELDUNG**

(43) Veröffentlichungstag:
06.10.1999 Patentblatt 1999/40

(51) Int. Cl.⁶: **G11B 5/704**, B32B 27/36

(21) Anmeldenummer: 99105835.5

(22) Anmeldetag: 23.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 01.04.1998 DE 19814710

(71) Anmelder:
Mitsubishi Polyester Film GmbH
65203 Wiesbaden (DE)

(72) Erfinder:
• Hellmann, Jörg
  55131 Mainz (DE)
• Hilkert, Gottfried
  55291 Saulheim (DE)
• Goerlitz, Wolfram
  65193 Wiesbaden (DE)

(74) Vertreter:
Schweitzer, Klaus, Dr. et al
Patentanwaltskanzlei Zounek,
Industriepark Kalle-Albert,
Rheingaustrasse 190-196
65203 Wiesbaden (DE)

(54) **Mehrschichtige, biaxial orientierte Polyesterfolie, Verfahren zu ihrer Herstellung und ihre Verwendung als Magnetbandfolie**

(57) Die Erfindung betrifft eine dreischichtige, biaxial orientierte Polyesterfolie, die bei sehr guten elektromagnetischen Eigenschaften gegenüber Folien aus dem Stand der Technik verbesserte Abriebeigenschaften aufweist. Die Folie ist beidseitig aufgebaut aus mindestens einer Basisschicht B und auf dieser Basisschicht aufgebrachten Deckschichten A und C, wobei diese Deckschichten eine definierte Anzahl von Erhebungen mit einer definierten Höhe aufweist. Die Erfindung betrifft weiterhin ein Verfahren zur Herstellung der Folie und ihre Verwendung als Magnetbandfolie.

**Beschreibung**

Die Erfindung betrifft eine zumindest dreischichtige, biaxial orientierte Polyesterfolie, die bei verbesserten elektromagnetischen Eigenschaften gegenüber Folien aus dem Stand der Technik verbesserte Abriebeigenschaften aufweist, wirtschaftlich herstellbar ist und die aufgebaut ist aus mindestens einer Basisschicht B und beidseitig auf dieser Basisschicht aufgebrachten Deckschichten A und C, wobei diese Deckschichten durch $R_a$-Werte, $R_z$-Werte beschrieben werden und eine definierte Anzahl von Erhebungen mit einer definierten Höhe aufweisen, und die Folie eine spezifische Trübung von $\leq$ 0.4 %/$\mu$m aufweist. Die Erfindung betrifft weiterhin ein Verfahren zur Herstellung der Folie und ihre Verwendung, insbesondere als Magnetbandfolie.

Polyesterfolien wurden schon seit langem, insbesondere aufgrund ihrer exzellenten mechanischen Eigenschaften, als Trägermaterial für magnetische Aufzeichnungsmaterialien verwendet. Ein optimales magnetisches Aufzeichnungsmedium mit guten elektromagnetischen Eigenschaften weist eine möglichst glatte Oberfläche auf. Für ein gutes Verarbeitungsverhalten während der Beschichtung und im späteren Gebrauch, um ein gutes Abriebverhalten zu erreichen, sollte die Oberfläche eine gewisse Rauhigkeit aufweisen. Diese an sich widersprüchlichen Anforderungen können von Monofolien (einschichtigen Folien) nur mit einer gewissen Kompromißbereitschaft erfüllt werden, da bei diesen Folien die Optimierung der einen Eigenschaft immer zu Lasten der anderen Eigenschaft geht.

Es sind aber heute auch schon coextrudierte Mehrschichtfolien bekannt (AB, ABA und ABA'), mit denen eine sogenannte "Dual-Surface"-Charakteristik erzeugt werden kann. Hierbei kann man den beiden Folienoberflächen zwar in begrenztem Maße unterschiedliche Eigenschaften (Rauhigkeiten, Topographien) zuweisen; jedoch den widersprüchlichen Anforderungen nach verbesserten elektromagnetischen Eigenschaften bei gleichzeitig gutem Abriebverhalten nicht gerecht werden.

So wird beispielsweise in der **EP-A-0 135 451** eine "Dual-Surface"Folie vom Typ A/B beschrieben, wobei die beiden Folienoberflächen unterschiedliche $R_a$-Werte aufweisen. Diese Folien haben jedoch den Nachteil, daß sie nicht wirtschaftlich hergestellt werden können, da beide Schichten - entsprechend zwei aufeinanderliegenden Monofolien - mit Partikelsystemen ausgerüstet werden müssen und somit im Vergleich zu Monofolien keine Kostenersparnis erlauben. Darüber hinaus wird das bei jedem kommerziellen Herstellungsprozeß anfallende und (zwingend) wiederzuverwendende Folienregenerat (Recyclat), welches in mindestens einer Oberflächenschicht der A/B-Folie eingearbeitet werden muß, die Qualität der Magnetbandfolie negativ beeinträchtigen.

Eine Verbesserung dieser Qualitätsproblematik wird in der **EP-A-0 609 060** und der **EP-A-0 663 286** durch das Prinzip der A/B/A-Coextrusion erreicht. Hier kann die Wirkung des Regenerats auf die Folienoberfläche durch den abschirmenden Effekt der beiden Deckschichten A reduziert werden. Eine A/B/A-Folie zeigt jedoch nach außen hin die Eigenschaft einer (dünnen) Monofolie, d.h. der Vorteil der Schaffung von unterschiedlichen Oberflächeneigenschaften geht verloren. Eine "Dual-Surface" Charakteristik kann mit A/B/A-Folien jedoch bedingt eingestellt werden, durch unterschiedliche Dicken der A-Deckschichten. Solche Folien werden dann als A/B/A'-Folien ($\neq$A/B/C) bezeichnet. Nachteilig an diesen Folien ist aber die immer noch sehr eingeschränkte Flexibilität in der unterschiedlichen Gestaltung der Oberflächentopographien der beiden Folienoberflächen. Auch ist der Einfluß auf Eigenschaften wie die elektromagnetischen Eigenschaften oder die Abriebfestigkeit, wie in den Vergleichsbeispielen 1 bis 6 gezeigt wird, nicht vorhanden.

Vereinzelt sind auch schon A/B/C- und A/B/C/B-Folien hergestellt und beschrieben worden (**EP-A-0 502 745**), jedoch enthält hierbei wiederum mindestens eine Oberflächenschicht Regenerat - welches die oben beschriebenen Nachteile aufweist - oder aber die Hinweise auf A/B/C-Folien sind unspezifisch (**EP-A-0 347 646**).

Aufgabe der vorliegenden Erfindung war es nun, eine coextrudierte, biaxial orientierte mehrschichtige Polyesterfolie zur Verfügung zu stellen, die sich als Trägermaterial für magnetische Aufzeichnungsmedien eignet und sich gleichzeitig durch eine glattere Oberfläche (für gute elektromagnetische Eigenschaften des Magnetbandes) und eine rauhere Oberfläche (für gutes Verarbeitungsverhalten bei schnellaufenden Beschichtungsanlagen und gutes Laufverhalten im späteren Betrieb des Bandes) und einen niedrigen Abrieb auszeichnet. Weiterhin soll sich die qualitativ hochwertige (gekennzeichnet durch geringe Drop-Out-Werte) Folie wirtschaftlich (kostengünstig) herstellen lassen.

Diese Aufgabe wird erfüllt durch eine biaxial orientierte, coextrudierte, mindestens dreischichtige Polyesterfolie, deren beide Oberflächen durch Deckschichten A und C gebildet werden, wobei sich zwischen diesen Deckschichten eine Basisschicht B befindet, dadurch gekennzeichnet, daß die Deckschicht A

einen $R_a$-Wert von $\leq$ 15 nm,
einen $R_z$-Wert von $\leq$ 150 nm aufweist und eine Anzahl von Erhebungen/Vorsprüngen $N_a$ pro 0.36 mm$^2$ aufweist, die mit ihren jeweiligen Höhen $h_a$ in folgender Beziehung steht:

$$A_1 \cdot e^{-B_1 \cdot h_a} \leq N_a \leq A_2 \cdot e^{-B_2 \cdot h_a} \tag{1}$$

mit

$A_1 = 300$, $A_2 = 7000$

$B_1 = 7.0$, $B_2 = 8.0$

$0.01\ \mu m \leq h_a \leq 1.0\ \mu m$

und die Deckschicht C

einen $R_a$-Wert aufweist, der größer ist als der der Deckschicht A

und eine Anzahl von Erhebungen/Vorsprüngen $N_c$ pro $0.36\ mm^2$ aufweist, die mit ihren jeweiligen Höhen $h_c$ in folgender Beziehung steht:

$$N_c \leq F \cdot e^{-G \cdot h_c} \qquad (2)$$

mit $F = 20.000$ und $G = 9.0$

und wobei die spezifische Trübung $\leq 0.4\ \%/\mu m$ ist.

Unter Erhebungen/Vorsprünge im Sinne der vorliegenden Erfindung werden kegelige Erhebungen/Vorsprünge verstanden, die aus der planaren Folienoberfläche hervorragen.

Rauhigkeiten der die magnetische Beschichtung tragenden Deckschicht A von $R_a \leq 15\ nm$ und $R_z \leq 150\ nm$ sind für gute elektromagnetische Eigenschaften erforderlich. Darüber hinaus muß zur Erzielung der gewünschten elektromagnetischen Eigenschaften der Deckschicht A entsprechend der Gleichung (1) die Anzahl an Erhebungen/Vorsprüngen $N_a$ pro $0.36\ mm^2$ Folienoberfläche in dem in Gleichung (1) beschriebenen Bereich liegen. Dieser Bereich ist durch die Gleichung (1) für verschiedene Höhen der Erhebungen/Vorsprünge festgelegt.

Für die Erzielung von guten elekromagnetischen Eigenschaften der Deckschicht A ist eine bestimmte Anzahl an Erhebungen/Vorsprüngen $N_a$ pro $0.36\ mm^2$ auf der magnetisch zu beschichtenden Folienoberfläche erforderlich. Ist die Anzahl größer als der in Gleichung (1) für verschiedene Höhen $h_a$ beschriebene obere Grenzbereich, so werden die elektromagnetischen Eigenschaften schlechter (z.B. das C-S/N-Verhältnis). Ist die Anzahl kleiner als der in Gleichung (1) angegebene untere Grenzbereich, so können Probleme bei der Verarbeitung der Folie oder beim Laufverhalten des Magnetbandes im Videorecorder auftreten.

Zur Erzielung eines guten Laufverhaltens und eines guten Abriebverhaltens ist eine rauhe Rückseite (Deckschicht C) erforderlich. Zweckmäßigerweise beträgt der Unterschied in den $R_a$-Werten zwischen den Seiten A und C mindestens 2, bevorzugt 3, besonders bevorzugt 4 nm. Er sollte jedoch nicht größer sein als 10 nm, bevorzugt 8 nm, besonders bevorzugts 7 nm.

Die Rauhheit dieser Deckschicht muß größer sein als die der Deckschicht A. Zur Vermeidung von Transkriptionseffekten der rauhen Rückseite auf die glatte Magnetschicht (extrudiert auf Deckschicht A) im aufgewickelten Magnetband, muß die Anzahl der Erhebungen $N_c / 0.36\ mm^2$ geringer sein als der in Gleichung (2) genannte obere Grenzbereich.

"Dual-Surface"-Folien vom A/B-Typ müssen bei vergleichbarer Funktion mit einer erhöhten Menge an Partikeln hergestellt werden, was zwangsläufig mit einer Erhöhung der Trübung einhergeht. Erfindungsgemäße Folien mit mindestens ebensolcher Funktionalität können mit erheblich weniger Partikeln hergestellt werden, was zu geringeren Produktionskosten und zu geringeren Trübungswerten führt. Der spezifische Trübungswert der erfindungsgemäßen Folien ist $\leq 0.4\ \% / \mu m$, wobei die spezifische Trübung definiert ist als die Trübung der Folie gemäß der Norm ASTM-D 1003-61 dividiert durch die Gesamtdicke der gemessenen Folie in $\mu m$.

Als besonders zweckmäßig hat es sich erwiesen, wenn der $R_a$-Wert der Deckschicht A bevorzugt $\leq 13\ nm$, insbesondere $\leq 11\ nm$ beträgt. Der $R_z$-Wert dieser Oberfläche ist bevorzugt $\leq 130\ nm$, besonders bevorzugt $\leq 110\ nm$. Die Topographie der Deckschicht A, ausgedrückt durch die Gleichung (1), ist bevorzugt, wenn $A_1 = 500$, insbesondere $A_1 = 600$ und/oder $A_2$ bevorzugt $= 6.000$, insbesondere $5.000$ und/oder $B_1$ bevorzugt $= 6.8$, insbesondere $B_1 = 6.6$ und/oder $B_2$ bevorzugt $= 7.9$, insbesondere $B_2 = 7.8$.

Die Deckschicht C besitzt bevorzugt eine Rauhigkeit $R_a \leq 25\ nm$, insbesondere $\leq 20\ nm$, ganz besonders bevorzugt $\leq 18\ nm$, wobei die Bedingung, daß die Rauhheit $R_a$ der Deckschicht C immer größer ist als die der Deckschicht A, weiterhin erfüllt ist. Bevorzugt ist eine Topographie der Deckschicht C, wenn die Parameter F und G der Gleichung (2) folgende Werte einnehmen: $F = 18.000$, insbesondere $F = 16.000$ und/oder $G = 9.2$, insbesondere $G = 9.4$.

Bevorzugte spezifische Trübungen für die erfindungsgemäße Folie liegen bei $\leq 0.35\ \% / \mu m$, insbesondere bei $\leq 0.30\ \% / \mu m$.

In den bevorzugten und den besonders bevorzugten Ausführungsformen zeichnet sich die erfindungsgemäße Folie überraschenderweise durch eine gute Qualität ein verbessertes Transkriptionsverhalten und ein verbessertes Laufverhalten bei weiterverarbeitenden Prozessen mit hohen Geschwindigkeiten aus.

Die erfindungsgemäße Folie enthält zur Erzielung der guten elektromagnetischen Eigenschaften sowie hoher Abriebfestigkeit und im wesentlichen ausgeschlossener Transkription in den Deckschichten Pigmente. Die Steuerung des Ausmaßes der Topographie im Rahmen der Gleichungen (1) und (2) geschieht zweckmäßigerweise durch Variation der Pigmentkonzentration und/oder deren mittlerer Korngröße $d_{50}$.

Zur Erreichung der Topographie der Deckschicht A nach Gleichung (1) haben sich Pigmentkonzentrationen von 500 ppm bis 10.000 ppm, bevorzugt 800 ppm bis 8.000 ppm, insbesondere 1.000 ppm bis 6.000 ppm bei mittleren Korngrößen ($d_{50}$) von 0.1 $\mu$m bis 2.0 $\mu$m, bevorzugt 0.2 $\mu$m bis 1.5 $\mu$m, insbesondere 0.3 $\mu$m bis 1.0 $\mu$m, erwiesen. Handelt es sich bei den eingesetzten Pigmenten um agglomerationsfähige Pigmente wie $Al_2O_3$ oder $SiO_2$, so ist mit "mittlerer Korngröße" deren Sekundärkorngröße gemeint. Üblicherweise liegen die Primärkorngrößen solcher Pigmente bei 10 bis 100 nm. Die eingesetzten Pigmentsysteme können eine monomodale oder als Mischung von zwei oder mehreren Pigmentsystemen auch eine bimodale oder multimodale Verteilung aufweisen, wobei im Falle der bimodalen Verteilung sich diese in ihren jeweiligen $d_{50}$-Werten unterscheiden. Bevorzugt werden Pigmente mit einer engen Korngrößenverteilung eingesetzt.

Zur Erreichung der Topographien der Deckschicht C nach Gleichung (2) haben sich Pigmentkonzentrationen von 1.000 ppm bis 15.000 ppm, bevorzugt 2.000 ppm bis 12.000 ppm, insbesondere 3.000 ppm bis 10.000 ppm bei mittleren Korngrößen ($d_{50}$) von 0.1 $\mu$m bis 2.0 $\mu$m, bevorzugt 0.2 $\mu$m bis 1.8 $\mu$m, insbesondere 0.3 $\mu$m bis 1.5 $\mu$m, erwiesen. Handelt es sich bei den eingesetzten Pigmenten um agglomerationsfähige Pigmente wie $Al_2O_3$ oder $SiO_2$ so ist mit "mittlerer Korngröße" deren Sekundärkorngröße gemeint. Üblicherweise liegen die Primärkorngrößen solcher Pigmente bei 10 bis 100 nm.

Erfindungsgemäß ist die Folie zumindest dreischichtig aufgebaut und weist auf der einen Seite der Schicht B (=Basisschicht) die Deckschicht A und auf der anderen Seite der Schicht B eine weitere Deckschicht C aus Polyethylenterephthalat auf. Beide Deckschichten enthalten die für die Erreichung der Topographien der Folie förderlichen Pigmente.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroximethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als vorteilhaft haben sich solche Verfahren erwiesen, bei denen Umesterungskatalysatoren eingesetzt werden, bei denen nur wenige und/oder nur kleine Erhebungen/Vorsprünge auf der Oberfläche der Folie erzeugt werden. Bevorzugt sind hierbei insbesondere Magnesium- und Mangan-Salze. Diese Umesterungskatalysatoren werden vorteilhaft bei der Herstellung des Basisrohstoffes, besonders vorteilhaft aber bei der Herstellung des Rohstoffes für die Deckschichten verwendet.

Für die Deckschichten können prinzipiell die gleichen Polymere verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren besteht, welches Ethylen2,6-naphthalat-Einheiten und Ethylen-terephthalat-Einheiten enthalten. Bis zu 10 Mol% der Polymere können aus weitere Comonomeren (s.o.) bestehen.

Für eventuell vorhandene Zwischenschichten können prinzipiell die gleichen Polymere verwendet werden, wie zuvor für die Basisschicht und die Deckschichten beschrieben.

Die Basisschicht und die anderen Schichten können zusätzlich übliche Additive, wie bspw. Stabilisatoren und/oder Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. über Masterbatche bei der Extrusion zugegeben werden. Als besonders geeignet haben sich Pigmentkonzentrationen von 0.1 bis 5 Gew.-% erwiesen. Eine detaillierte Beschreibung der einsetzbaren Antiblockmittel findet sich beispielsweise in der **EP-A-0 602 964**.

Die Basisschicht der erfindungsgemäßen Folie ist im wesentlichen unpigmentiert, kann jedoch durch das Einbringen von Regenerat (= wiederverwertbare Folienreste) Pigmente in kontrollierter Menge enthalten, wobei diese Menge so gewählt wird, daß sie sich nicht negativ auf die Anzahl der Erhebungen/Vorsprünge, insbesondere der Deckschicht A ($N_a$) auswirkt.

Die erfindungsgemäße Polyesterfolie ist mindestens dreischichtig aufgebaut und enthält die beiden Deckschichten A und C. Dicke und Zusammensetzung der zweiten Deckschicht C können unabhängig von der Deckschicht A gewählt werden, wobei die zweite Deckschicht ebenfalls die bereits genannten Polymere oder Polymermischungen enthalten kann, welche aber nicht mit der ersten Deckschicht identisch sein müssen. Die zweite Deckschicht kann auch andere gängige Deckschichtpolymere enthalten. Bevorzugt sind beide Deckschichten gleich dick. Der Vorteil der erfindungsgemäßen Folie liegt gerade darin, daß sich die unterschiedlichen Deckschichttopographien durch gezielte Variation der Pigmentkonzentration und/oder der Pigmentkorngröße bei im wesentlichen gleicher Deckschichtdicke einstellen lassen.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht sie aus dem für die Basisschicht verwendeten Polyester. Sie kann auch die für die Deckschichten beschriebenen Additive enthalten. Die Dicke der Zwischenschicht ist im allgemeinen in der Größenordnung der Deckschichtdicken.

Bei der dreischichtigen erfindungsgemäßen Folie sind die Dicken der Deckschichten A und C im allgemeinen größer als 0,2 $\mu$m und liegen im Bereich von 0,3 bis 2,5 $\mu$m, bevorzugt im Bereich von 0,5 bis 2,0 $\mu$m, besonders bevorzugt im Bereich von 0,7 bis 1,8 $\mu$m, wobei die Deckschichten A und C gleich oder verschieden dick sein können. Bevorzugt sind sie im wesentlichen gleich dick.

Die Gesamtdicke der erfindungsgemäßen Polyesterfolie kann innerhalb weiter Grenzen variieren. Sie beträgt 5 bis 40 $\mu$m, insbesondere 7 bis 30 $\mu$m, vorzugsweise 9 bis 20 $\mu$m.

Zur Herstellung der Schichten A und C (Deckschichten A und C) werden Granulate aus Polyethylenterephthalat jeweils einem Extruder zugeführt. Die Materialien werden bei etwa 300 °C aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Zur Erhöhung der Festigkeiten dieser Folien kann nach der Querverstreckung zusätzlich noch eine weitere Verstreckung in Längsrichtung folgen.

Die Temperatur, bei der die Verstreckung durchgeführt wird, kann in einem relativ großen Bereich variieren und richtet sich nach den geforderten Eigenschaften der Folie. Im allgemeinen wird die Längsstreckung bei $T_g$ + 10 °C bis $T_g$ + 60 °C und die Querstreckung bei $T_g$ + 20 °C bis $T_g$ + 80 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Zweckmäßigerweise erfolgt die zusätzliche Verstreckung in Längsrichtung bei $T_g$ + 10 °C bis $T_g$ + 60 °C, mit einem Streckverhältnis von 1,2 : 1 bis 2,5 : 1, vorzugsweise bei $T_g$ + 20 °C bis $T_g$ + 50 °C, mit einem Streckverhältnis von= 1.3 : 1 - 2.3 : 1

Vor der Querstreckung kann man eine oder beide Oberfläche(n) der Folie nach den bekannten Verfahren inline beschichten. Die In-Line-Beschichtung kann beispielsweise zu einer verbesserten Haftung der magnetisierbaren Schicht aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der magnetisierbaren Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Sofern erwünscht, erfolgt das Aufbringen von magnetisierbaren Schichten auf üblichen industriellen Anlagen.

Ein Vorteil der Erfindung besteht darin, daß die Herstellungskosten der erfindungsgemäßen Folie geringer sind als diejenigen nach dem Stand der Technik. Die verarbeitungs- und gebrauchsrelevanten Eigenschaften der erfindungsgemäßen Folie sind auf die gewünschten Eigenschaften maßgeschneidert. Die bei der Herstellung der Folie anfallenden Folienabfälle werden als Regenerat, ohne Einbuße in der Qualität, wiederverwendet.

Die Folie eignet sich hervorragend als Trägerfolie für Magnetbänder.

Zusammengefaßt zeichnet sich die erfindungsgemäße Folie durch sehr gute elektromagnetische Eigenschaften bei hoher Abriebfestigkeit und einem vernachlässigbaren Transkriptionsverhalten, sowie niedrige Drop-Out-Werte aus. Desweiteren zeichnet sich die Folie durch hohe Antistatikeigenschaften aus. Außerdem besitzt sie das gewünschte gute Verarbeitungsverhalten, insbesondere hervorragende Schneidbarkeit und Wickeleigenschaften.

Die nachstehende Tabelle (Tabelle 1) faßt die wichtigsten erfindungsgemäßen Folieneigenschaften noch einmal zusammen.

Tabelle 1

| | erfingungsgemäßer Bereich | bevorzugt | besonders bevorzugt | Einheit | Meßmeth ode |
|---|---|---|---|---|---|
| $R_a(A)$ | < 15 | < 13 | < 11 | nm | DIN 4768 |
| $R_z(A)$ | <150 | <130 | <110 | | DIN 4762 |
| $A_1/A_2$ | 300/7.000 | 500/6.000 | 800/5.000 | | |
| $B_1/B_2$ | 7.0/8.0 | 6.8 / 7.9 | 6.6/ 7.8 | | |
| $R_a(C)$ | < 25 | < 20 | < 18 | nm | DIN 4768 |
| F/G | 20.000 / 9.0 | 18.000 / 9.2 | 16.000 / 9.4 | | |
| spez. Trübung | $\leq 0.4$ | $\leq 0.35$ | $\leq 0.3$ | | ASTM-D 1003-61 |

Zur Charakterisierung der Folien wurden folgende Methoden benutzt:

**Bestimmung der Rauhigkeit**

Die Rauhigkeit $R_a$ der Folie wurde nach DIN 4762 bei einem Cutt-off von 0,08 mm bestimmt.

Gerät :                   Perthometer SP8 (Fa. Hommel) auf Glasplatte
Taster :                  RFHTB-50 mit Kufe
Nadeldurchmesser :  5 $\mu$m
Auflagekraft :           0,4 mN
Abstandkufe :           - 25 mm

**Bestimmung der Trübung**

Die Trübung der Folie wurde nach ASTM-D 1003-61 (Meßmethode A) mit dem Meßgerät XL-211 Hazemeter der Firma BYK Gardner gestimmt. Die spezifische Trübung=

$$\frac{Tr\ddot{u}bung}{Gesamtdicke\ der\ Folie} \frac{\%}{\mu m} \tag{3}$$

**Bestimmung der Anzahl von Erhebungen auf Folienoberflächen durch Schattentopografie**

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.

Für diese Messungen werden Folienproben flach auf einen Probenhalter aufgebracht. Anschließend werden diese unter einem Winkel $\alpha$ mit einer dünnen Metallschicht (z.B. aus Silber) schräg bedampft. Dabei ist $\alpha$ der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.

Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, daß die Schatten parallel zu einem Bildrand verlaufen. Für die Bildaufnahme werden folgende Bedingungen am REM eingestellt: Sekundärelektronendetektor, Arbeitsabstand 10 mm, Beschleunigungsspannung 10 kV und Spot 4,5. Die Helligkeit und Kontrast werden so eingestellt, daß sämtliche Bildinformationen als Grauwerte dargestellt werden und die Intensität des Grundrauschens so klein ist, daß er nicht als Schatten detektiert wird. Die Länge der Schatten wird mit dem Bildanalyse ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, daß Erhebungen, die im Bild nicht vollständig abgebildet werden, nicht mitgemessen werden. Die Vergrößerung, der Rahmengröße und die Anzahl der ausgewerteten Bildern werden so gewählt, daß insgesamt 0,36 mm$^2$ Folienoberfläche ausgewertet werden.

Die Höhe der einzelnen Erhebungen wird aus den einzelnen Schattenlängen mit folgender Beziehung errechnet:

$$h = (\tan \alpha) * L \tag{4}$$

wobei h die Höhe der Erhebung, $\alpha$ der Bedampfungswinkel und L die Schattenlänge ist. Die so ermittelten Erhebungen werden in Klassen eingeteilt um zu einer Häufigkeitsverteilung zu kommen. Die Einteilung erfolgt in 0,05µm-breite Klassen zwischen 0 und 1 µm, wobei die kleinste Klasse (0 bis 0,05 µm) für weitere Auswertungen nicht verwendet wird.

**Bestimmung der elektromagnetischen Eigenschaften (EMP)**

Die elektromagnetischen Eigenschaften wurden nach DIN IEC 60 B (CO) 69 bestimmt. Es wurde jeweils die Koex- A (Beispiele 1 bis 9) bzw. Außenseite (Vergleichsbeispiele 1 bis 7) der Folien nach den bekannten Verfahren magnetisch beschichtet, kalandriert und für die Bestimmung der elektromagentischen Eigenschaften ausgewertet wurden. Die Stärke der Magnetschicht beträgt typischerweise 1.8 bis 2.0 µm.

**Abriebfestigkeit**

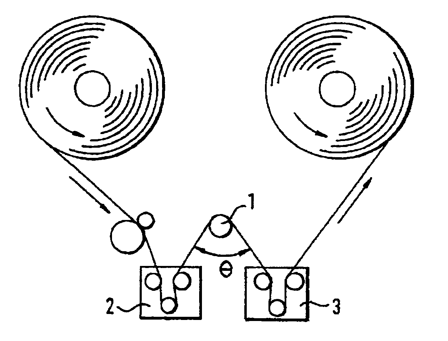

Die Abriebfestigkeit wurde mit einer umgebauten Tonbandmaschine, wie in Abb.1 dargestellt, ermittelt. Die Ausstattung des Gerätes beinhaltet zwei Meßgeräte (2 und 3) zur Kontrolle der Bandspannung und einem Pin (1), über den eine Seite der Oberfläche der Folie bei einer definierten Geschwindigkeit und einem definierten Winkel (8) gezogen wird. Der an dem Pin erzeugte Abrieb wird mittels optischer und mikroskopischer Methoden klassifiziert (- = viel Abrieb, 0 = Abrieb vergleichbar zu Standard, + = besser als Standard, ++ = wenig Abrieb).

Zur Beurteilung der Abriebfestigkeit wurden entsprechende Schmalschnitte von 1 cm Breite und 200 Meter Länge präpariert. Die Bestimmung der Abriebfestigkeit erfolgte jeweils nur auf der Folienseite, die später als Rückseite des Magnetbandes verwendet wurde.

Bandgeschwindigkeit : 19 cm/sec
Bandspannung : 200 g
Kontaktwinkel $\theta$ : 135 °
Pin : SUS 204 2S, $\varnothing$ 6 mm, CrO$_2$ Oberfläche

**Beispiele 1 bis 9**

Chips aus Polyethylenterephthalat (hergestellt über das Umesterungsverfahren mit Mn als Umesterungskatalysator, Mn-Konzentration: 100 ppm) und arteigenes Recyclat mit einer "allgemeinen" Partikelkonzentration von 1.150 ppm ($CaCO_3$ < 1.0 $\mu$m; $Al_2O_3$ 0.06 $\mu$m) wurden bei 135 °C auf eine Restfeuchte von unterhalb 50 ppm getrocknet und dem Extruder für die Basisschicht B zugeführt.

Daneben wurden Mischungen von Chips aus Polyethylenterephthalat (hergestellt über das Umesterungsverfahren mit Mn als Umesterungskatalysator, Mn-Konzentration: 00 ppm), die entsprechend Tabelle 2 pigmentiert sind, ungetrocknet den jeweiligen Doppelschneckenextrudern für die Deckschichten A und C zugeführt.

Es wurde durch Coextrusion und anschließende stufenweise Orientierung in Längs-und und Querrichtung eine transparente dreischichtige A/B/C-Folie mit einer Gesamtdicke von 15 $\mu$m hergestellt. Die Dicke der jeweiligen Deckschichten wurde über den Durchsatz der Coextruder geregelt und einsprechend den Tabellen 2 und 3 eingestellt.

Basisschicht B:

| 50,0 Gew.-% | Polyethylenterephthalat mit einem SV-Wert von 770 |
| 50,0 Gew.-% | Recyclat mit einem SV-Wert von 730 |

Die Herstellungsbedingungen in den einzelnen Verfahrensschritten waren:

| Extrusion: | Temperaturen | A-Schicht: | 290 °C |
| | | B-Schicht: | 290 °C |
| | | C-Schicht: | 290 °C |
| Längsstreckung: | Temperatur: | | 80-125 °C |
| | Längsstreckverhältnis: | | 4,7 |
| Querstreckung: | Temperatur: | | 80 - 135 °C |
| | Querstreckverhältnis: | | 4,0 |
| Fixierung: | Temperatur: | | 210-225 °C |

**Vergleichsbeispiele 1 bis 5 (ABA) und 6 (A/B/A') und 7 (Mono)**

Für Vergleichsbeispiele 1 bis 6 wurde gemäß der technischen Beschreibung zu den Beispielen 1 bis 9 vorgegangen. Die Pigmentierung der Deckschichten A(C=A) ist in Tabelle 3 dargestellt. Die unterschiedlichen Deckschichtdicken wurden über einen verringerten und/oder gesteigerten Durchsatz der Extruder eingestellt.

Bei Vergleichsbeispiel 7 erfolgte die Pigmentierung ausschließlich in Schicht B. Die beiden Koextruder wurden nicht verwendet.

Tabelle 2

| Beispiel Nr. | Coextrusion A | | | Coextrusion C | | | | Rauhigkeit | |
| | $CaCo_3$ | $Al_2O_3$ $d_{50}$=0.06 $\mu$m | | $CaCo_3$ | $Al_2O_3$ $d_{50}$=0.06 $\mu$m | org. Pig. $d_{50}$=0.04 $\mu$m | | $R_a/R_z$ A (außen) | $R_a/R_z$ C (innen) |
| | $d_{50}$ [$\mu$m] | % | % | $d_{50}$ [$\mu$m] | % | % | % | [nm] | [nm] |
| 1 | 0.6 | 0.45 | ./. | 0.7 | 0.5 | 0.1 | ./. | 13/96 | 12/93 |
| | 0.8 | 0.04 | | | | | | | |

Tabelle 2 (fortgesetzt)

| Beispiel Nr. | Coextrusion A | | | Coextrusion C | | | | Rauhigkeit | |
|---|---|---|---|---|---|---|---|---|---|
| | CaCo$_3$ | | Al$_2$O$_3$ d$_{50}$=0.06 μm | CaCo$_3$ | | Al$_2$O$_3$ d$_{50}$=0.06 μm | org. Pig. d$_{50}$=0.04 μm | R$_a$/R$_z$ A (außen) | R$_a$/R$_z$ C (innen) |
| | d$_{50}$ [μm] | % | % | d$_{50}$ [μm] | % | % | % | [nm] | [nm] |
| 2 | 0.6 | 0.45 | ./. | 0.7 | 0.5 | 0.1 | ./. | 13/90 | 12/99 |
| 3 | 0.6 | 0.25 | ./. | 0.7 | 0.5 | 0.1 | ./. | 9/70 | 13/105 |
| 4 | 0.6 | 0.65 | ./. | 0.7 | 0.5 | 0.1 | ./. | 14/94 | 12/91 |
| 5 | 0.6 | 0.45 | ./. | 0.4 0.7 | 0.5 0.4 | 0.45 | ./. | 12/81 | 13/90 |
| 6 | 0.6 | 0.45 | ./. | 0.4 0.7 | 0.5 0.1 | 0.45 | ./. | 11/72 | 11/94 |
| 7 | 0.6 | 0.45 | ./. | 0.8 | 0.06 | 0.40 | ./. | 12/93 | 14/99 |
| 8 | 0.7 | 0.3 | ./. | 0.7 | 0.5 | 0.45 | ./. | 11/79 | 13/103 |
| 9. | 0.6 | 0.2 | ./. | 0.7 | 0.4 | 0.3 | ./. | 9/64 | 12/93 |

Beispiele 1 bis 9 ABC (Schichtdicke A=C= 1 μm , B = 13 μm)
Prozenangaben erfolgen in Gew.-%.

Tabelle 3

| Vergleichsbeispiel Nr. | Coextrusion A = Coextrusion C | | | Schichtdicke / μm | | | Rauhigkeit | |
|---|---|---|---|---|---|---|---|---|
| | CaCO$_3$ | | Al$_2$O$_3$ d$_{50}$=0.06 | A | B | A (VB 6 = A') | Ra/Rz A außen | Ra/Rz C innen |
| | d$_{50}$ [μm] | % | % | | | | A | C |
| 1 | 0.6 | 0.51 | 0.645 | 1.4 | 12.2 | 1.4 | 15/107 | 15/105 |
| 2 | 0.6 | 0.51 | 0.645 | 0.6 | 13.8 | 0.6 | 13/98 | 12/91 |
| 3 | 0.6 | 0.51 | 0.645 | 2.0 | 11.0 | 2.0 | 17/110 | 16/110 |
| 4 | 0.6 0.8 | 0.45 0.04 | 0.45 | 1.0 | 13.0 | 1.0 | 13/84 | 12/79 |
| 5 | 0.7 | 0.3 | 0.45 | 1.0 | 13.0 | 1.0 | 11/80 | 11/73 |
| 6 | 0.6 | 0.51 | 0.645 | 0.6 | 12.4 | 2.0 | 11/70 | 14/86 |
| 7 | 0.7 | 0.265 | 0.3 | ./. | 15 | ./. | 15/101 | 15/99 |

Schicht C = Schicht → A/B/A (10 = A/B/A')
Prozentangaben erfolgen in Gew.-%.

Tabelle 4 zeigt eindeutig, daß Folien, deren Topografie im erfindungsgemäßen Bereich liegen (Besipiele 3 und 9), hervorragend elektromagnetische und zufriedenstellende (Beispiel 3) beziehungsweise hervorragende Abriebfestigkeiten (Beispiel 9) aufweisen. Die Variation in den Parametern A, B, F und G zeigt, wie diese sich auf die elektromagnetischen und Abriebeigenschaften auswirken. In den erfindungsgemäßen Beispielen konnten die EMP gegenüber dem Standard (Vergleichsbeispiel 4, VB 4) um bis zu 2 db verbessert werden.

Tabelle 4

| Beispiel | Ra (A) (nm) | Ra (C) (nm) | spez. Trübung | A | B | F | G | EMP | Abriebfestigkeit |
|---|---|---|---|---|---|---|---|---|---|
| 1 | 13 | 12 | 0.24 | 6449 | - 9,9 | 2402 | - 6,4 | 0 | 0 |
| 2 | 13 | 12 | 0.23 | 4178 | - 8,2 | 2394 | - 6,4 | 0 | 0 |
| 3 | 9 | 13 | 0.20 | 2359 | - 7,3 | 2394 | - 6,4 | ++ | 0 |
| 4 | 14 | 12 | 0.26 | 6278 | - 8,6 | 2394 | - 6,4 | - | 0 |
| 5 | 12 | 13 | 0.25 | 4543 | - 8,1 | 10125 | - 9,0 | 0 | ++ |
| 6 | 11 | 11 | 0.21 | 4543 | - 8,1 | 14472 | - 11,7 | 0 | + |
| 7 | 12 | 14 | 0.26 | 4619 | - 8,5 | 15830 | - 12,6 | 0 | + |
| 8 | 11 | 13 | 0.22 | 1751 | - 6.5 | nb | nb | - | ++ |
| 9 | 9 | 13 | 0.21 | 1991 | - 7,5 | 2300 | - 6,1 | ++ | ++ |

- schlecht
0 standard
+ gut
++ sehr gut
nb nicht bestimmt

Tabelle 5 zeigt, daß Folien gemäß Stand der Technik (ABA-, ABA'- bzw. Monofolien) nicht die gestellten Aufgabe lösen.
Die Parameter F und G wurden für die Vergleichsbeispiele 1 bis 5 und 7 nicht ermittelt, da es sich dabei um symmetrische Folien handelt.

Tabelle 5

| Vergleichsbeispiel | Ra außen (nm) | Ra innen (nm) | spez. Trübung | A | B | F | G | EMP | Abriebfestigkeit |
|---|---|---|---|---|---|---|---|---|---|
| 1 | 15 | 15 | 0.33 | 6120 | - 8,8 | - | - | 0 | nb |
| 2 | 13 | 12 | 0.27 | 4898 | - 8,6 | - | - | 0 | nb |
| 3 | 17 | 16 | 0.43 | 5388 | - 8,3 | - | - | 0 | 0 |
| 4 | 13 | 12 | 0.28 | 6149 | - 8,9 | - | - | 0 | + |
| 5 | 11 | 11 | 0.21 | 2394 | - 7,0 | - | - | - | + |
| 6 | 11 | 14 | 0.23 | 4956 | - 8,7 | 5264 | - 8,2 | - | + |
| 7 | 15 | 15 | 0.5 | 1971 | - 6,9 | - | - | - | + |

- schlecht
0 standard
+ gut
++ sehr gut

Für Vergleichsbeispiele 5 (ABA), 6 (ABA') und 7 (Mono) ergaben sich, bei einem guten Abriebverhalten der Rückseite, für die Magnetseite gegenüber dem Stand der Technik deutlich verschlechterte elektromagnetische Eigenschaften. Für die Vergleichsbeispiele 1 bis 7 genügten die elektromagnetischen Eigenschaften der Magnetbänder nicht den hier gestellten Anforderungen.

**Patentansprüche**

1. Biaxial orientierte, coextrudierte, mindestens dreischichtige Polyesterfolie, deren beide Oberflächen durch Deckschichten A und C gebildet werden, wobei sich zwischen diesen Deckschichten eine Basisschicht B befindet, dadurch gekennzeichnet, daß die Deckschicht A

   - einen $R_a$-Wert von $\leq$ 15 nm, und
   - einen $R_z$-Wert von $\leq$ 150 nm aufweist und eine
   - Anzahl von Erhebungen/Vorsprüngen $N_a$ pro 0.36 mm$^2$ aufweist, die mit ihren jeweiligen Höhen $h_a$ in folgender Beziehung steht:

$$A_1 \cdot e^{-B_1 \cdot h_a} \leq N_a \leq A_2 \cdot e^{-B_2 \cdot h_a} \tag{1}$$

   mit

   $A_1$ = 300, $A_2$ = 7000
   $B_1$ = 7.0, $B_2$ = 8.0 und
   0.01 $\mu$m $\leq h_A \leq$ 1.0 $\mu$m

   und die Deckschicht C
   - einen $R_a$-Wert aufweist, der größer ist als der der Deckschicht A und eine
   - Anzahl von Erhebungen/Vorsprüngen $N_c$ pro 0.36 mm$^2$ aufweist, die mit ihren jeweiligen Höhen $h_c$ in folgender Beziehung steht:

$$N_c \leq F \cdot e^{-G \cdot h_c} \tag{2}$$

   mit F = 20.000 G=9.0
   und wobei die spezifische Trübung $\leq$ 0.4 %/$\mu$m ist.

2. Folie nach Anspruch 1, dadurch gekennzeichnet, daß die Deckschichten A und C Partikel enthalten.

3. Folie nach Anspruch 2, dadurch gekennzeichnet, daß die Deckschicht A Partikel in einer Konzentration von 500 ppm bis 10.000 ppm, bezogen auf das Gewicht der Deckschicht, enthält.

4. Folie nach Anspruch 2 oder 3, dadurch gekennzeichnet, daß die Deckschicht C Partikel in einer Konzentration von 1.000 ppm bis 15.000 ppm, bezogen auf das Gewicht der Deckschicht, enthält.

5. Folie nach Anspruch 2, 3 oder 4, dadurch gekennzeichnet, daß die mittlere Korngröße $d_{50}$ der Partikel zwischen 0.2 $\mu$m und 2.0 $\mu$m liegt.

6. Folie nach einem oder mehreren der Ansprüche 2 bis 5, dadurch gekennzeichnet, daß die Partikel in mindestens einer Deckschicht eine bimodale Verteilung aufweisen.

7. Folie nach einem oder mehreren der Ansprüche 2 bis 6, dadurch gekennzeichnet, daß die mittlere Korngröße $d_{50}$ der Partikel des am häufigsten vorkommenden Partikelsystems in der Deckschicht A kleiner ist als die der Partikel in der Deckschicht C.

8. Folie nach einem oder mehreren der Ansprüche 2 bis 7, dadurch gekennzeichnet, daß die durch die Gleichungen (1) und (2) ausgedrückten unterschiedlichen Topographien der Deckschichten A und C durch Variation der Konzentration der Partikel/Partikelsysteme in den Deckschichten A und C und/oder durch verschiedene mittlere Korngrößen $d_{50}$ der Partikel/Partikelsysteme in den Deckschichten A und C eingestellt werden.

9. Folie nach einem oder mehreren der Ansprüche 1 bis 8, dadurch gekennzeichnet, daß die Deckschichtdicken der Deckschichten A und C unabhängig voneinander gleich oder verschieden sind und zwischen 0.3 bis 2.5 $\mu$m liegen.

10. Folie nach einem oder mehreren der Ansprüche 1 bis 9, dadurch gekennzeichnet, daß die Gesamtfoliendicke 5 $\mu$m bis 40 $\mu$m beträgt.

**11.** Folie nach einem oder mehreren der Ansprüche 1 bis 10, dadurch gekennzeichnet, daß die Basisschicht B Folienregenerat enthält.

**12.** Verfahren zur Herstellung einer biaxial orientierten, coextrudierten, mindestens dreischichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei die Deckschicht A

- einen $R_a$-Wert von $\leq$ 15 nm, und
- einen $R_z$-Wert von $\leq$ 150 nm aufweist und eine
- Anzahl von Erhebungen/Vorsprüngen $N_a$ pro 0.36 mm$^2$ aufweist, die mit ihren jeweiligen Höhen $h_A$ in folgender Beziehung steht:

$$A_1 \cdot c^{-B1 \cdot hA} \leq N_A \leq A_2 \cdot c^{-B2 \cdot hA} \tag{1}$$

mit

$A_1 = 300$, $A_2 = 7000$
$B_1 = 7.0$, $B_2 = 8.0$ und
$0.01 \ \mu m \leq h_A \leq 1.0 \ \mu m$

und die Deckschicht C
- einen $R_a$-Wert aufweist, der größer ist als der der Deckschicht A und eine
- Anzahl von Erhebungen/Vorsprüngen $N_c$ pro 0.36 mm$^2$ aufweist, die mit ihren jeweiligen Höhen $h_c$ in folgender Beziehung steht:

$$N_c \leq F \cdot c^{-G \cdot hc} \tag{2}$$

mit $F = 20.000$ $G = 9.0$
und wobei die spezifische Trübung $\leq 0.4$ %/$\mu m$ ist.

**13.** Magnetisches Aufzeichnungsmedium, enthaltend eine Folie nach Anspruch 1 und eine auf einer Oberfläche der Folie aufgebrachten magnetisierbaren Schicht.

**14.** Magnetisches Aufzeichnungsmedium nach Anspruch 13, dadurch gekennzeichnet, daß die magnetisierbare Schicht auf die Deckschicht A aufgebracht ist.

**15.** Verwendung einer Folie nach Anspruch 1 als Magnetband.

**16.** Verwendung einer Folie nach Anspruch 1 als Thermo-Transfer-Ribbon.